# EUROPÄISCHE PATENTSCHRIFT

(11) **EP 0 546 282 B1**
(45) Veröffentlichungstag und Bekanntmachung des Hinweises auf die Patenterteilung: **02.08.1995**
(21) Anmeldenummer: 92117677.2
(22) Anmeldetag: 16.10.1992
(51) Int. Cl.: B60S 3/00

(54) **Verfahren zum Waschen von Fahrzeugen in einer Waschanlage**
Method of washing vehicles in a washing plant
Procédé de lavage de véhicules dans une installation de lavage

(30) Priorität: 12.12.1991 DE 4140931
(43) Veröffentlichungstag der Anmeldung: 16.06.1993
(73) Patentinhaber: WESUMAT FAHRZEUGWASCHANLAGEN GmbH & Co. KG, D-86156 Augsburg (DE)
(72) Erfinder: Weigele, Gebhard, W-8902 Neusäss (DE); Decker, Wolfgang, W-8901 Zusmarshausen-Wollbach (DE)
(74) Vertreter: Liebau, Gerhard, Dipl.-Ing.

(56) Entgegenhaltungen:
- EP-A- 0 180 253
- EP-A- 0 341 389
- EP-A- 0 394 777
- DE-B- 2 714 960
- DE-U- 9 114 923

## Beschreibung

Die Erfindung betrifft ein Verfahren zum Waschen von Fahrzeugen in einer Waschanlage, bei dem die Fahrzeuge mit Wasser gewaschen, gegebenenfalls nach oder während des Waschens Trocknungsmittel und/oder Konservierungsmittel enthaltendes Wasser auf die Fahrzeuge aufgebracht wird, die Fahrzeuge in einem separaten, abschließenden Spülvorgang mit Spülwasser gespült und anschließend die auf den Fahrzeugen verbliebenen Spülwasserreste durch Abblasen, Abwischen und/oder Verdunsten entfernt werden. Dieses Verfahren ist z.B. aus der DE-C-2 218 669, DE-C-2 834 582 oder DE-A-3 918 688 bekannt.

Das Waschen von Fahrzeugen, insbesondere Personenkraftwagen, in Waschanlagen wird in unterschiedlicher Weise durchgeführt, wobei allen bekannten Waschverfahren jedoch gemeinsam ist, daß vor dem Trocknen des Fahrzeuges ein abschließender Spülvorgang mit Frischwasser oder neuerdings auch vollständig entsalztem Wasser stattfindet. Durch den abschließenden Spülvorgang sollen z.B. Waschmittelreste, Reste von überschüssigem Konservierungsmittel vor dem Trocknen abgespült werden, um eine möglichst fleckenfreie Trocknung zu erreichen. Das abschließende Spülen ist bei Einsatz von Tuchtrocknern unbedingt erforderlich, um die Saugfähigkeit der Tücher zu erhalten. Ferner ist es bekannt, vor der Trocknung zu einem geeigneten Zeitpunkt Trocknungsmittel auf die Fahrzeuge aufzubringen. Derartige Trocknungsmittel mit hydrophobierender Wirkung haben die Aufgabe, das Spülwasser so zu beeinflussen, daß der Spülwasserfilm großflächig aufreißt und möglichst große Tropfen bildet, die von einem Gebläse mit möglichst geringer Leistung von der Fahrzeugoberfläche abgeblasen werden können (vgl. DE-C-22 18 669 und 28 34 582). Es ist auch bekannt, das Trocknungsmittel vor einem Bürstenwaschvorgang für sich alleine oder auch zusammen mit einem Waschmittel auf die Fahrzeuge aufzubringen (DE-C-38 39 022) und vor der Trocknung in einem abschließenden Spülvorgang die Fahrzeuge mit Spülwasser zu spülen. Auch hierbei soll durch die vor dem Bürstenwaschvorgang aufgebrachten Trocknungsmittel ein großflächiger Aufriß des Spülwasserfilmes erreicht werden.

Wenn man den abschließenden Spülvorgang mit Frischwasser durchführt, dann läßt es sich nicht vermeiden, daß an Stellen, wo die Spülwasserreste nicht vollständig durch ein Gebläse abgeblasen oder durch einen Tuchtrockner abgewischt sind, die verbliebenen, mehr oder weniger großen, Spülwassertropfen beim späteren Verdunsten an der Luft Flecke hinterlassen, die vor allem an Stoßstangen und Rückspiegeln sichtbar sind. Diese Flecken sind darauf zurückzuführen, daß in dem zum Spülen verwendeten Leitungswasser mehr oder weniger große Mengen an Kalk und Salzen enthalten sind. Da auch bei vollständiger Entkalkung von Leitungswasser immer noch eine Fleckenbildung infolge von Salzen auftritt, hat man in den letzten Jahren für den letzten Spülvorgang voll entsalztes Wasser verwendet, welches in aufwendiger Weise durch sogenannte Umkehrosmose gewonnen wird (Siehe z.B. EP-A-0 394 777). Zur Herstellung von derartigem, voll entsalztem Wasser, auch Permeat genannt,
sind teure Membranen erforderlich, die nur eine begrenzte Lebensdauer haben. Außerdem entsteht bei der umgekehrten Osmose neben dem voll entsalzten Wasser auch Wasser, welches eine erhöhte Konzentration von Salzen aufweist, da es neben seinem ursprünglichen Gehalt an Salzen auch noch die dem voll entsalzten Wasser entnommenen Salzmengen enthält. Dieses salzhaltige Wasser, auch Konzentrat genannt, fällt je nach Einstellung der Entsalzungsanlage in Mengen zwischen 40 und 90%, bezogen auf die Permeatwasserleistung an. Das Wasser mit erhöhtem Salzgehalt wird bisher meist ungenutzt in die Kanalisation abgeleitet.

Da neben den Kosten für entnommenes Frischwasser auch Kanalgebühren erhoben werden, und diese nach der entnommenen Leitungswassermenge berechnet werden, ist die Verwendung von voll entsalztem Wasser für den abschließenden Spülvorgang verhältnismäßig teuer. Hierbei ist außerdem noch zu berücksichtigen, daß pro Pkw etwa 30 l voll entsalztes Wasser erforderlich sind. Praktische Versuche haben nämlich ergeben, daß das voll entsalzte Wasser mindestens einen Leitwert von 50 »s/cm auf dem Fahrzeug haben muß, um fleckenfrei aufzutrocknen. Da Leitungswasser zwischen 500 bis 1000 »s/cm hat, ist die genannte Menge an voll entsalztem Wasser notwendig, um auf der Fahrzeugoberfläche noch von vorhergehenden Behandlungsvorgängen befindliches Wasser so weit mit voll entsalztem Wasser zu "verdünnen", daß der oben genannte geringe Leitwert erreicht wird.

Schließlich ist es auch noch bekannt, dem beim abschliessenden Spülvorgang verwendeten Spülwasser ein die Oberflächenspannung des Wassers herabsetzendes Mittel beizugeben (DE-A-39 18 688), wobei dieses Wasser auch voll entsalztes Wasser sein kann. Zweck dieser Maßnahme ist es, überschüssiges Konservierungsmittel von der Fahrzeugoberfläche abzuspülen, wobei durch das dem Spülwasser beigegebene Entspannungsmittel erreicht werden soll, daß auf der Fahrzeugoberfläche nur noch ein sehr dünner Wasserfilm zurückbleibt, der an der Luft, ein Gebläse mit geringer Leistung, oder auch einen Tuchtrockner leicht entfernt werden kann.

Der Erfindung liegt die Aufgabe zugrunde, ein Verfahren zum Waschen von Fahrzeugen in einer Waschanlage der eingangs genannten Art dahingehend zu verbessern, daß für den abschließenden Spülvorgang wesentlich weniger Spülwasser benötigt wird und dementsprechend die Betriebskosten, insbesondere bei Verwendung von voll entsalztem Wasser für den Spülvorgang, gesenkt werden.

Dies wird nach der Erfindung dadurch erreicht, daß vor dem abschließenden Spülvorgang das noch auf den Fahrzeugen befindliche Wasser durch Abblasen weitgehend entfernt wird, bevor Spülwasser in geringer Menge auf die Fahrzeuge aufgebracht wird.

Die Erfindung geht also von dem Gedanken aus, die von vorhergehenden Behandlungsmaßnahmen, wie Waschen, Konservieren und einem eventuellen Vorspülen auf der Fahrzeugoberfläche vorhandenen Wasserreste, die z.B. Waschmittel, Konservierungsmittel oder gegebenenfalls auch Trocknungsmittel enthalten können, so gut wie möglich mechanisch zu entfernen. Für diese mechanische Entfernung kann ein Gebläse verwendet werden, wie es sonst zur endgültigen Fahrzeugtrocknung eingesetzt wird. Die Verwendung eines Gebläses hat insbesondere bei Portalwaschanlagen den Vorteil, daß sie keine zusätzlichen Investitionen erfordert, da ein derartiges Gebläse zur endgültigen Trocknung ohnehin meist vorhanden ist. Durch die weitgehende Entfernung von Wasser, welches von vorhergehenden Behandlungsvorgängen noch an der Fahrzeugoberfläche haftet, ist für den abschließenden Spülvorgang nur eine sehr geringe Menge von Spülwasser erforderlich. Nach dem Entfernen des Wassers vor dem abschließenden Spülvorgang haften nämlich nur noch sehr geringe Mengen von Wasser, welches von den vorhergehenden Behandlungsvorgängen Waschmittel, Konservierungsmittel, Trocknungsmittel und auch Salze enthält, an der Fahrzeugoberfläche, die beim abschließenden Spülvorgang weggespült bzw. "verdünnt" werden müssen. Der Verbrauch an Spülwasser für den abschliessenden Spülvorgang kann etwa auf 1/6 der bisher üblichen Menge reduziert werden.

Bevorzugt wird für den letzten Spülvorgang vollständig entsalztes Wasser verwendet. Hierbei wirken sich die Vorteile des erfindungsgemäßen Verfahrens besonders aus, denn die Lebensdauer der zur Entsalzung notwendigen Membranen steigt um ein Vielfaches und der Verbrauch an Frischwasser, das zur Herstellung von vollständig entsalztem Wasser nötig ist, sinkt. Da Frischwasser vor der Entsalzung meistens auch noch in einem separaten Vorgang entkalkt werden wird, reduziert sich auch der Salzverbrauch in der hierzu benötigten Enthärtungsanlage.

Vorteilhafte Verfahrensmaßnahmen sind in den Unteransprüchen gekennzeichnet.

Die Erfindung wird in folgendem, anhand der Zeichnung näher erläutert. Es zeigen:
- Figur 1: die Seitenansicht einer Portalwaschanlage in verschiedenen Verfahrensschritten a - f,
- Figur 2: die Seitenansicht einer Durchlaufwaschanlage.

Anhand der Zeichnungen soll nachstehend die Durchführung des erfindungsgemäßen Verfahrens näher erläutert werden. Hierbei sind nur einige Möglichkeiten beschrieben, die jedoch noch vielfältig variiert werden können.

Bei Durchführung des erfindungsgemäßen Verfahrens mittels einer Portalwaschanlage wird das Portal 1 mit den daran gelagerten rotierenden Seitenbürsten 2 und der Dachbürste 3 in einem ersten Arbeitsgang gewaschen, wobei mit Waschmittel versetztes Wasser auf die Fahrzeugoberfläche aufgebracht wird, oder aber auch Waschmittel und Wasser getrennt. Das Portal bewegt sich hierbei in Pfeilrichtung A von rechts nach links.

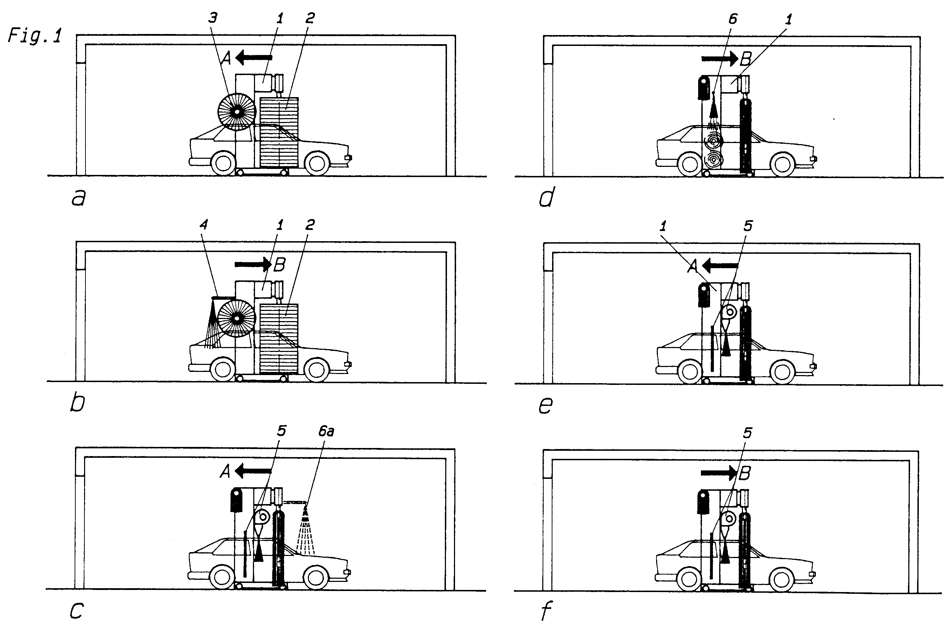

Bei Rückwärtsbewegung des Portals gemäß Figur 1 b in Richtung B wird das Fahrzeug nochmals mit den Bürsten 2, 3 gewaschen und über eine nachgeschaltete Sprüheinrichtung 4 Wasser, welches Konservierungsmittel oder ein Trocknungsmittel enthält, auf die Fahrzeugoberfläche aufgesprüht. Die beiden bisher beschriebenen Behandlungsschritte gemäß Figur 1 a und b sind üblicher Art.

Nach Beendigung der in Figur 1 a und b dargestellten Verfahrensschritte haften auf der Fahrzeugoberfläche noch Reste von Wasser, welches Waschmittel, Konservierungsmittel und/oder Trocknungsmittel enthalten kann. Dieses Wasser soll nun gemäß der Erfindung mechanisch durch Abblasen entfernt werden. Da bei einer Portalwaschanlage an dem Portal normalerweise auch ein Gebläse zur endgültigen Trocknung des Fahrzeuges vorhanden ist, wird dieses Gebläse nunmehr zum weitgehenden Entfernen des noch auf dem Fahrzeug haftenden Wassers verwendet. Das Portal 1 bewegt sich gemäß Figur 1 c in Pfeilrichtung A nach links, wobei das Gebläse 5 die Wasserreste von der Fahrzeugoberfläche bläst. Wurde vorher ein hydrophobierend wirkendes Trocknungsmittel aufgesprüht, dann ist das restliche Wasser in Form von großen Tropfen auf der Fahrzeugoberfläche vorhanden und kann durch das Gebläse 5 leicht abgeblasen werden.

In einem weiteren Verfahrensschritt gemäß Figur 1 d wird das Portal 1 wieder in Pfeilrichtung B zurückbewegt, wobei über ein am Portal 1 vorgesehenes Sprührohr oder einen Sprühbogen 6 voll entsalztes Spülwasser in einer Menge von etwa 5 l pro Fahrzeug auf die Fahrzeugoberfläche aufgesprüht wird. Diese geringe Spülwassermenge reicht völlig aus, um die wenigen Wasserreste, die nach dem vorhergehenden Abblasen gemäß Figur 1c noch auf der Fahrzeugoberfläche vorhanden sind, abzuspülen oder so weit zu verdünnen, daß nach Beendigung des Trocknungsvorganges gemäß Figur 1 e und f etwa noch vorhandene Spülwassertropfen fleckenfrei trocknen. Der Trocknungsvorgang wird gemäß Figur 1 e und f durch Bewegung des Portals 1 zunächst in Pfeilrichtung A und dann in Pfeilrichtung B bewirkt, wobei das Gebläse 5 eingeschaltet ist. Wenn vorher auf die Fahrzeugoberfläche im Verfahrensschritt gemäß Figur 1 b Konservierungsmittel oder ein hydrophobierend wirkendes Trocknungsmittel aufgebracht wurde, dann bewirkt dies, daß die Spülwasserreste nach dem Verfahrensschritt Figur 1 d in Form von Tropfen vorliegen, die von dem Gebläse 5 abgeblasen werden. Man könnte jedoch gegebenenfalls dem Spülwasser auch ein Entspannungsmittel, d.h. ein die Oberflächenspannung des Wasser herabsetzendes, hydrophilierend wirkendes Trocknungsmittel zugeben. In diesem Fall würde dann das Spülwasser weitgehend von der Oberfläche abfließen und nur noch ein sehr dünner Spülwasserfilm auf der Oberfläche vorhanden sein, der mit geringer Gebläseleistung zum Verdunsten gebracht werden kann. An trockenen, warmen Tagen oder auch in wärmeren Gegenden kann die endgültige Trocknung bei Verwendung von voll entsalztem Spülwasser gegebenenfalls auch ganz entfallen.

Man kann das vorher beschriebene Waschverfahren bei einer Portalwaschanlage auch variieren und verkürzen, indem man den Verfahrensschritt gemäß Figur 1 c so durchführt, daß man das restliche Wasser durch das Gebläse 5 von der Fahrzeugoberfläche abbläst und in Fahrtrichtung des Portals versetzt die strichpunktiert dargestellte Sprühvorrichtung 6a anordnet, die dann unmittelbar nach dem Abblasen des restlichen Wassers das voll entsalzte Spülwasser auf das Fahrzeug sprüht. In diesem Fall können dann die Verfahrensschritte gemäß Figur 1 d und e entfallen und das Fahrzeug gemäß Figur 1 f bei Rückwärtsbewegung des Portals 1 in Richtung B getrocknet werden.

Weiterhin wäre es auch denkbar, anstelle von voll entsalztem Spülwasser noch entkalktes Spülwasser oder auch frisches Leitungswasser zu verwenden. In beiden Fällen verringert sich der Spülwasserverbrauch, da gemäß dem Verfahrensschritt gemäß Figur 1 c das von vorherigen Behandlungsvorgängen vorhandene restliche Wasser durch Abblasen weitgehend von der Fahrzeugoberfläche entfernt worden ist.

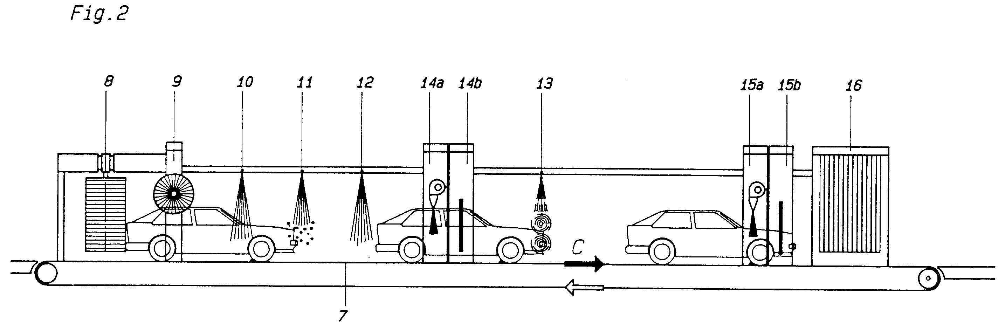

Die Durchführung des Verfahrens bei einer Durchlaufwaschanlage, wie sie in Figur 2 dargestellt ist, erfolgt in der nachstehend beschriebenen Weise. Hierbei wird das Fahrzeug durch die Fördervorrichtung 7 in Richtung C durch die Anlage gezogen. Es durchläuft zunächst die vertikalen rotierenden Seitenbürsten 8 und die Dachbürste 9, wo es mit Waschmittel und Wasser gewaschen wird. Über einen ersten Sprühbogen 10 kann unbehandeltes Leitungswasser auf das Fahrzeug aufgesprüht werden, um Waschmittelreste zu entfernen. An einem weiteren Sprühbogen 11 wird Wasser, welches Konservierungsmittel oder Trocknungsmittel enthält, aufgesprüht. Überflüssiges, Konservierungs- oder Trocknungsmittel enthaltendes Wasser kann durch Frischwasser, welches aus einem weiteren Sprühbogen 12 austritt, entfernt werden. Gegebenenfalls können auch die Spülvorgänge an dem Sprühbogen 10 und 12 entfallen. Man kann auch den Auftrag des Trocknungsmittels, so wie es in der DE-C-38 39 022 beschrieben ist, sowie auch den Auftrag des Konservierungsmittels bereits vor den Bürsten 8, 9 vornehmen.

In jedem Fall ist es wichtig, daß Wasserreste, die von den vorhergehenden Wasch-, Konservierungs- und eventuellen Spülvorgängen auf der Fahrzeugoberfläche vorhanden sind, mechanisch entfernt werden, bevor über einen weiteren Sprühbogen 13 ein abschließender Spülvorgang, vorzugsweise mit voll entsalztem Spülwasser, vorgenommen wird. Das mechanische Entfernen des von den vorhergehenden Behandlungsvorgängen stammenden Wassers von der Fahrzeugoberfläche erfolgt durch Gebläse 14a bzw. 14b, wobei durch das Gebläse 14a das restliche Wasser von den nach oben gerichteten Teilen und durch das Gebläse 14b das restliche Wasser von den Seiten des Fahrzeuges abgeblasen wird. Wichtig ist, daß das von den vorhergehenden Behandlungsvorgängen stammende Wasser möglichst weitgehend von der Fahrzeugoberfläche entfernt wird, bevor das Fahrzeug in den Bereich des Sprühbogens 13 gelangt.

Mittels des aus dem Sprühbogen 13 beim abschließenden Spülvorgang auf die Fahrzeugoberfläche geleiteten Spülwassers werden die wenigen Reste von Wasser, die nach den Gebläsen 14a, 14b eventuell noch auf der Fahrzeugoberfläche vorhanden sind, abgespült bzw. so weit verdünnt, daß sie bei Verwendung von voll entsalztem Spülwasser fleckenfrei auftrocknen. Die Trocknung kann dadurch begünstigt werden, daß an einer Trockenstation das restliche Spülwasser durch das Gebläse 15a mit Dachdüse und das Gebläse 15b mit Seitendüsen von der Fahrzeugoberfläche abgeblasen bzw. durch den Gebläsestrom verdunstet wird. Zusätzlich oder anstelle einer Gebläsetrocknung kann auch wiederum ein Tuchtrockner 16 Verwendung finden. An warmen, trockenen Tagen oder auch in heißen Gegenden kann die Gebläse- oder Tuchtrocknung entfallen und das restliche Spülwasser durch die Umgebungsluft verdunstet werden.

Auch bei Durchlaufwaschanlagen kann das Verfahren so variiert werden, daß man den letzten Spülvorgang mit entkalktem Wasser oder Leitungswasser durchführt, wobei ebenfalls frisches Wasser eingespart werden kann, insbesondere wenn man auch noch auf Zwischenspülvorgänge an den Stationen 10 und 12 verzichtet. Durch das Abblasen im Bereich der Stationen 14a und 14b werden nämlich jegliche Wasserreste, die noch Waschmittel, Konservierungsmittel und sonstige Mittel enthalten können, so weitgehend von der Fahrzeugoberfläche entfernt, daß man gegebenenfalls nur mit einem einzigen Spülvorgang an der Station 13 auskommt. In so einem Fall kann es jedoch erforderlich sein, anstelle der zuvor erwähnten Spülwassermenge von nur 5 l pro Pkw etwas mehr Spülwasser beim abschließenden Spülvorgang an der Station 13 einzusetzen. In jedem Fall ist jedoch die beim abschließenden Spülvorgang erforderliche Spülwassermenge um ein Vielfaches geringer als bei bisherigen Waschverfahren.

Bezüglich dem Zusatz eines eventuellen Entspannungsmittels beim abschließenden Spülvorgang gilt das gleiche, was oben anläßlich der Beschreibung des Verfahrens im Zusammenhang mit einer Portalwaschanlage ausgeführt wurde.

Bei der Erzeugung von voll entsalztem Wasser (Permeat) aus Leitungswasser durch Umkehrosmose entsteht auch Wasser mit einem gegenüber dem Ausgangs-Leitungswasser erhöhten Salzgehalt. Dieses Wasser, welches auch als Konzentrat bezeichnet wird, kann mit Vorteil an den Stationen 10 und/oder 11 und/oder 12 eingesetzt werden, so daß die dem Leitungsnetz entnommene Wassermenge vollständig zum Waschen der Fahrzeuge ausgenutzt wird.

Das erfindungsgemäße Verfahren kann nicht nur zum Waschen von Kraftfahrzeugen, sondern beispielsweise auch zum Waschen von Eisenbahnzügen oder gegebenenfalls auch Luftfahrzeugen verwendet werden. Besondere wirtschaftliche Vorteile entstehen bei der Anwendung des erfindungsgemäßen Verfahrens dann, wenn der abschließende Spülvorgang mit voll entsalztem Wasser durchgeführt wird.

Die Spülwirkung beim abschließenden Spülvorgang an kritischen Stellen, wie Stoßstangen, Rückspiegel und dgl. kann noch durch zusätzliche Maßnahmen verbessert werden, indem man die Düsen im Bereich der Rückspiegel schwenkt, zusätzliche Düsen mit einer anderen Sprührichtung zuschaltet oder auch die Relativbewegung des Fahrzeuges gegenüber den Düsen verlangsamt.

## Patentansprüche

1. Verfahren zum Waschen von Fahrzeugen in einer Waschanlage, bei dem die Fahrzeuge mit Wasser (10; Figur 1a) gewaschen, gegebenenfalls nach oder während des Waschens Trocknungsmittel und/oder Konservierungsmittel enthaltendes Wasser auf die Fahrzeuge aufgebracht wird (11, 12; Figur 1b), die Fahrzeuge in einem separaten, abschließenden Spülvorgang mit Spülwasser (Figuren 1c und 1d) gespült und anschließend die auf den Fahrzeugen verbliebenen Spülwasserreste durch Abblasen, Abwischen und/oder Verdunsten entfernt werden (15a, 15b, 16; Figuren 1e und 1f), **dadurch gekennzeichnet**, daß vor dem abschließenden Spülvorgang das noch auf den Fahrzeugen befindliche Wasser durch Abblasen weitgehend entfernt wird (14a, 14b; Figur 1c), bevor Spülwasser in geringer Menge auf die Fahrzeuge aufgebracht wird.

2. Verfahren nach Anspruch 1, **dadurch gekennzeichnet**, daß beim abschließenden Spülvorgang weniger als 10 Liter Spülwasser pro Personenkraftwagen aufgebracht werden.

3. Verfahren nach Anspruch 2, **dadurch gekennzeichnet**, daß beim abschließenden Spülvorgang etwa 5 Liter Spülwasser pro Personenkraftwagen aufgebracht werden.

4. Verfahren nach Anspruch 1, 2 oder 3, **dadurch gekennzeichnet**, daß für den abschließenden Spülvorgang voll entsalztes Wasser verwendet wird.

5. Verfahren nach Anspruch 1, 2 oder 3, **dadurch gekennzeichnet**, daß für den abschließenden Spülvorgang entkalktes Wasser verwendet wird.

6. Verfahren nach einem der Ansprüche 1 - 5, **dadurch gekennzeichnet**, daß für den abschließenden Spülvorgang dem Spülwasser ein Trocknungsmittel beigemischt wird.

7. Verfahren nach Anspruch 6, **dadurch gekennzeichnet,** daß das Trocknungsmittel ein Entspannungsmittel (Hydrophiliermittel) ist.

8. Verfahren nach Anspruch 6, **dadurch gekennzeichnet,** daß das Trocknungsmittel ein Hydrophobiermittel ist.

9. Verfahren nach Anspruch 1 und 4, **dadurch gekennzeichnet,** daß das bei der Erzeugung von voll entsalztem Wasser (Permeat) entstehende salzhaltige Wasser (Konzentrat) für Spülvorgänge verwendet wird, die vor dem abschließenden Spülvorgang durchgeführt werden.

## Claims

1. A method of washing vehicles in a washing installation, in which the vehicles are washed with water (10; Figure 1a), water containing a drying medium and/or a protective medium is optionally applied to the vehicles after or during the washing (11, 12; Figure 1b), the vehicles are rinsed with rinsing water (Figures 1c and 1d) in a separate, final rinsing operation and then the residue of rinsing water remaining on the vehicles is removed by blowing off, wiping off and/or vaporisation (15a, 15b, 16; Figures 1e and 1f), characterized in that the water on the vehicles is largely removed before the final rinsing operation by blowing off (14a, 14b; Figure 1c) before rinsing water is applied to the vehicles in small amounts.

2. A method according to claim 1, characterized in that less than 10 litres of rinsing water per private car is applied in the final rinsing operation.

3. A method according to claim 2, characterized in that approximately 5 litres rinsing water per private car is applied in the final rinsing operation.

4. A method according to claim 1, 2 or 3, characterized in that completely desalinated water is used for the final rinsing operation.

5. A method according to claim 1, 2 or 3, characterized in that de-limed water is used for the final rinsing operation.

6. A method according to any one of claims 1 to 5, characterized in that a drying medium is mixed with the rinsing water for the final rinsing operation.

7. A method according to claim 6, characterized in that the drying medium is a medium reducing surface tension (hydrophillic medium).

8. A method according to claim 6, characterized in that the drying medium is a hydrophobic medium.

9. A method according to claim 1 and claim 4, characterized in that the saline water (concentrate) resulting in the production of fully desalinated water (permeate) is used for rinsing operations which are carried out before the final rinsing operation.

## Revendications

1. Procédé de lavage de véhicules dans une installation de lavage, selon lequel les véhicules sont lavés à l'eau (10; figure 1a), de l'eau contenant un agent de séchage et/ou un agent de protection est éventuellement appliquée sur les véhicules pendant ou après le lavage (11, 12; figure 1b), les véhicules sont rincés avec de l'eau de rinçage au cours d'une opération séparée de rinçage final (figures 1c et 1d), et ensuite les résidus d'eau de rinçage restés sur le véhicule sont éliminés par soufflage, essuyage et/ou évaporation (15a, 15b, 16; figures 1e et 1f), **caractérisé** en ce qu'avant l'opération de rinçage final, l'eau encore présente sur les véhicules est éliminée dans une large mesure par soufflage, essuyage ou brossage (14a, 14b; figure 1c), avant d'appliquer l'eau de rinçage en faible quantité sur les véhicules.

2. Procédé selon la revendication 1, **caractérisé** en ce que, pour l'opération de rinçage final, on applique moins de 10 litres d'eau de rinçage par voiture particulière.

3. Procédé selon la revendication 2, **caractérisé** en ce que, pour l'opération de rinçage final, on applique environ 5 litres d'eau de rinçage par voiture particulière.

4. Procédé selon la revendication 1, 2 ou 3, **caractérisé** en ce qu'on utilise pour l'opération de rinçage final de l'eau entièrement déminéralisée.

5. Procédé selon la revendication 1, 2 ou 3, **caractérisé** en ce qu'on utilise pour l'opération de rinçage final de l'eau débarrassée du calcaire.

6. Procédé selon l'une des revendications 1 à 5, **caractérisé** en ce que, pour l'opération de rinçage final, on ajoute à l'eau de rinçage un agent de séchage.

7. Procédé selon la revendication 6, **caractérisé** en ce que l'agent de séchage est un agent de détente (agent hydrophile).

8. Procédé selon la revendication 6, **caractérisé** en ce que l'agent de séchage est un agent hydrophobe.

9. Procédé selon les revendications 1 et 4, **caractérisé** en ce que l'eau minéralisée (concentrat) produite lors de la production d'eau entièrement déminéralisée (perméat) est utilisée pour des opérations de rinçage qui sont effectuées avant l'opération de rinçage final.
